# EUROPEAN PATENT APPLICATION

(11) **EP 4 303 061 A1**
(43) Date of publication of application: **10.01.2024**
(21) Application number: 22183610.9
(22) Date of filing: 07.07.2022
(51) Int. Cl.: B60L 3/00, B60L 50/20, B60L 58/21, B62M 1/00

(54) **METHOD FOR CONTROLLING THE SUPPLY OF ELECTRICITY IN A TWO OR THREE-WHEELED ELECTRIC VEHICLE**

(71) Applicant: ATEX INDUSTRIES S.R.L., 33078 San Vito al Tagliamento (PN) (IT)
(72) Inventor: Seddio, Marco, 33078 San Vito Al Tagliamento (IT)
(74) Representative: Perani & Partners S.p.A.

(57) **Abstract**

A method (1) of controlling the supply of electricity in a two- or three-wheeled electric vehicle (100) comprising the steps of: a) acquiring, by a first set of sensors (30) associated with the battery power unit (10), a first dataset (Set1) representative of operating parameters of the battery power unit (10);
b) acquiring, by a second set of sensors (40) associated with the driving apparatus (20), a second dataset (Set2) representative of operating parameters of the driving apparatus (20); c) sending the first dataset (Set1) and the second dataset (Set2) to a processing unit (50); (d) generating, by the processing unit (50), a system state signal (Ss) representative of an operating state of the electric vehicle (100), said system state signal (Ss) being a function of an operating state of the battery power unit and an operating state of the driving apparatus; e) comparing, by the processing unit (50), the system state signal (Ss) that has been generated with reference signals (Sr) associated with reference states for the electric vehicle (100) stored in a database (60) associated with the processing unit (50); f) generating a first control signal (Sc1) as a function of the comparison between the system state signal (Ss) that has been generated and the reference signals (Sr), said first control signal (Sc1) being representative of the electricity to be supplied by the battery power unit (10); g) adjusting, by a control unit (70) in signal communication with the control unit (50), the supply of electric current from the battery power unit (10) as a function of the first control signal (Sc1) that has been generated.

## Description

### Technical field

The present invention relates to a method of controlling the supply of electricity in a two- or three-wheeled electric vehicle such as an electric bicycle, an electric motor bike or an electric scooter. Preferably, the method of this invention also affords control of one or more components of the vehicle such as, for example, an electric motor. The present invention also relates to a two- or three-wheeled electric vehicle that can carry out the method of controlling the supply of electricity.

### Background art

Rechargeable batteries as used in electric vehicles such as bicycles become less efficient as they age due to various factors such as time, charge/discharge cycles, chemistry and operating temperatures. Therefore, methods and systems associated with electric vehicles are known in the art, which can monitor the performances of batteries and their motors, while accounting for the state of the batteries and the motor. Specifically, based on data acquired from batteries or electric motors, the methods and associated systems generate signals that advise the user about the battery state, such as residual charge level or the state of the electric motor, for example in terms of operating temperature or supplied electricity. Based on these generated signals, the prior art methods and systems may generate an alert signal if the identified parameters exceed pre-set thresholds so that the user can act on the vehicle.

### Problems of the prior art

The systems and methods of the prior art suffer from many drawbacks, caused by the difficulty of properly supplying electricity in response to the requirements of the vehicle. This is because the methods and systems act on the batteries and hence on the electric vehicle power supply in a passive manner, by only reporting the presence of criticalities and the performance state of the batteries and motors. Therefore, these warnings do not afford efficient control of the batteries and the vehicle or optimized employment of the batteries.

### Object of the invention

The object of the present invention is to provide a method and a two- or three-wheeled electric vehicle that can obviate the above discussed drawbacks of the prior art.

A particular object of the present invention to provide a method that can optimize the operation and preserve the performances of battery power units associated with a twoor three-wheeled electric vehicle over time.

The aforementioned technical purpose and objects are substantially fulfilled by a method of controlling the supply of electricity in a two- or three-wheeled electric vehicle, as well as by a two- or three-wheeled electric vehicle comprising the technical features as disclosed in one or more of the accompanying claims.

### Advantages of the Invention

Advantageously, the method and vehicle of the present invention afford improved use and performance of battery power units, thus saving both the capacity and the lifetime of the battery power unit.

Advantageously, the method and vehicle of the present invention can improve the use, performance and durability of components associated with the vehicle such as the electric motor, the gearbox and brakes by also acting on the capacity and lifetime of the battery power unit.

Advantageously, the method and vehicle of the invention can control and adjust the control parameters of the vehicle in view of optimizing the operation of the battery power unit and preserving its performance over time, as well as improving the use of the electric vehicle by acting on its components

Advantageously, the method and vehicle of the present invention can predict any faults and malfunctions, where these cannot be automatically avoided, by appropriate modulation of the control parameters.

### BRIEF DESCRIPTION OF THE FIGURES

Further features and benefits of this invention will appear more clearly from the indicative, non-restrictive description. a preferred, non-exclusive embodiment of a method of controlling the supply of electricity in a two- or three-wheeled electric vehicle and of a two- or three-wheeled electric vehicle.

As shown in the accompanying drawings:
- Figure 1 shows a block diagram of the method of controlling the supply of electricity in a two- or three-wheeled electric vehicle according to the present invention;

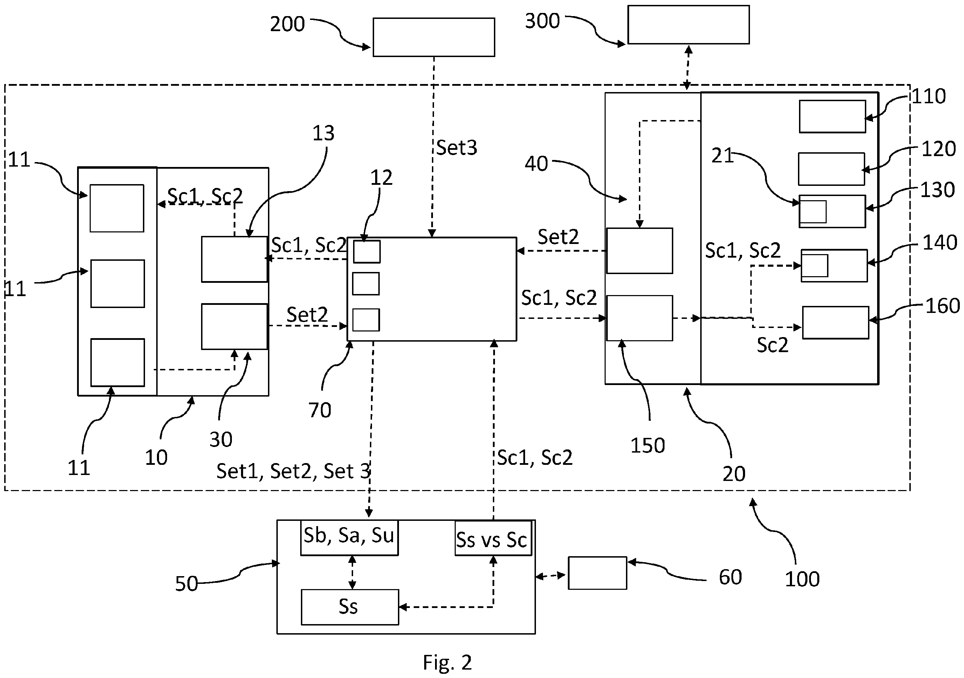

- Figure 2 shows a diagram of the operation of the method according to one embodiment of the present invention in its application on o a two- or three-wheeled electric vehicle.

### DETAILED DESCRIPTION

Even when not expressly stated, the individual features as described with reference to the particular embodiments shall be intended as auxiliary to and/or interchangeable with other features described with reference to other exemplary embodiments.

The present invention relates to a method of controlling the supply of electricity in a two- or three-wheeled electric vehicle, generally designated by numeral 1 in the figures.

Specifically, a two- or three-wheeled electric vehicle, generally designated by numeral 100 in the figures refers to an electric vehicle 100 comprising driving means 20 that are at least partially electrically powered and configured to impart motion to the vehicle 100 on a ground, and a battery-power unit 10 configured to power the driving means 20. It should be noted that the electric vehicle 100 may be driven/steered by a user on different types of terrain such as road and dirt patch.

Preferably, the electric vehicle 100 comprises control electronics for controlling and handling the battery power unit 10 and the driving means 20, namely one or more of their and mechanical components. Such control electronics are configured, for example, to regulate the supply of electricity and control the battery power unit 10 and the driving apparatus 20.

Namely, the battery power unit 10 comprises a plurality of battery cells 11 and is configured to supply electric power to the electric vehicle 100, whereas the driving apparatus 20 comprises a plurality of mechanical and electronic components, whose combination imparts motion to the electric vehicle 100. As further explained below, the driving apparatus 20 comprises all the mechanical and electronic components required for relevant driving of the electric vehicle 100 such as, for example, a support frame 110, tires 120, an electric motor 130, transmission means 140 configured to transmit the driving force from the electric motor 130 to the tires 120, control means 150 configured to control at least the electric motor 130 and transmission means 120 and drive means 160 configured to maneuver the electric vehicle (for example, to control manual/automatic shift gearbox, brakes, dampers, etc.).

It should be noted that the electric vehicle 100 may also have control and monitoring devices and/or user-wearable devices 200 associated therewith, such as smart watches for detecting vital signs of the user or a Global Positioning System (GPS).

The method 1 of the present invention is configured to control and regulate the supply of electricity from the battery power unit 10 to the driving apparatus 20, preferably to its components as a function of an operating state of the battery power unit 10 and the driving apparatus 20. Preferably, this can be done by changing the battery control parameters that act directly on the battery power unit 10 and/or the driving apparatus 20. More preferably, the control signals that act on the relevant control electronics modify the battery control parameters to control the supply of electricity.

Namely, the method 1 can control the supply of electricity from the battery cells 11 and the supply of electricity to the driving apparatus 20 as a function of their operating state. In detail, the method 1 is configured to regulate the amount of electricity to be supplied from the battery cells 11 and to supply it to the driving apparatus 20, in particular each of the components as a function of their operating states. Preferably, this control action is carried out by changing the battery control parameters.

This will optimize the operation of the battery power unit 10 and preserve its performance over time. In addition, the method 1 can optimize electricity management by controlling and monitoring the operating state of the electric vehicle.

Preferably, the method 1 of the present invention is also configured to control operating parameters of the battery power unit 10 and the driving apparatus 20. With this check, the method 1 makes it possible to further optimize the use of the battery power unit 10 as well as the driving apparatus 20. These operating control parameters are preferably associated with the components of the driving apparatus 20, such as the gearbox, the brake, the electric motor etc. In addition, the operating control parameters may also be associated with components of the battery power unit 10 such as temperature control

It should be noted that the operating parameters of the electric vehicle 100, namely the battery power unit 10 and the driving apparatus 20, are parameters that can be monitored, whereas the battery control parameters and the operating control parameters are adjustable as a function of the operating state respectively to control the supply of electricity and to control the battery power unit 10 and the driving apparatus 20 respectively. It should be noted that these battery control and operating control parameters allow the control electronics of the battery power unit 10 and the driving apparatus 20 to be acted upon in view of changing their operating parameters and operating state. Thus, a change to a control parameter may have a direct or indirect effect after some time or immediately on an operating parameter of the battery power unit 10 and the driving apparatus 20.

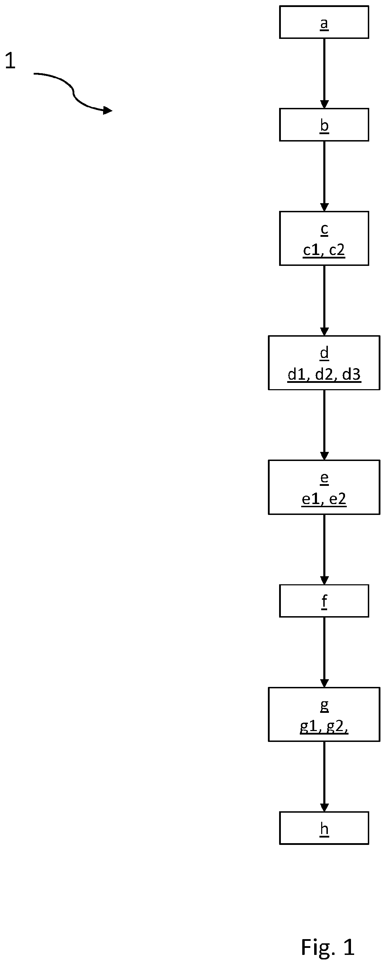

The method 1 comprises the following steps, conducted according to a preferred embodiment and schematically shown in the block diagram in Figure 1.

The method 1 comprises a step a) of acquiring, by a first set of sensors 30 associated with the battery power unit 10, a first dataset Set1 representative of operating parameters of the battery power unit 10. Preferably, the set of sensors 30 comprises a plurality of sensors configured to acquire operating parameters of the battery power unit 10 and of each battery cell 11. Such plurality of sensors may be at least partially inserted inside and/or in the vicinity of the battery power unit 10, e.g. on a protective cover. Namely, the step a) includes acquiring, preferably in a periodic manner, data concerning the operation of the battery power unit 10 in terms of operating parameters representative of a corresponding sampling interval. This affords continuous monitoring of the battery power unit 10 and of each battery cell 11. Preferably, the step a) can detect operating parameters for temperatures, voltages, charging currents and/or discharge currents of each battery cell 11. It should be noted that additional parameters may be detected, such as the overall temperature of the battery power unit 10 or the overall residual charge of the battery power unit 10. In detail, the first dataset Set1 comprises the operating parameters associated with the battery power unit 10, that can be acquired by the first set of sensors 30. Preferably, the adjusting battery control parameters allows to modify the operating parameters of the electric vehicle 100 associated with the supply of electricity. On the other hand, the adjusting the operating control parameters affords modification of the operating parameters of the electric vehicle 100 associated with to the control of the mechanical and electrical components.

The method 1 comprises a step b) of acquiring, by a second set of sensors 40 associated with the driving apparatus 20,a second dataset Set2 representative of operating parameters of the driving apparatus 20. As mentioned above, the second set of sensors 40 comprises a plurality of sensors associated with the driving apparatus 20 preferably one or more sensors for each of its mechanical or electronic component. Preferably, the step b) includes periodically acquiring data concerning the operation of the driving apparatus 20 in terms of operating parameters representative of a corresponding sampling interval. Thus, the step b) allows continuous monitoring of the operating state of the driving apparatus 20. Namely, the step b) can detect operating parameters for vehicle speed, torque delivered, motor temperatures and/or braking torque associated with the components of the driving apparatus 20. Additional operating parameters can be acquired such as the torque detected by the torque sensor, vibrations, vehicle tilt. In detail, the second dataset Set2 comprises one or more operating parameters associated with the driving apparatus 20 and adapted to be acquired by the second set of sensors 40. Preferably, adjustment of the operating control parameters allows modification of the operating parameters of the electric vehicle 100 associated with the control of the driving apparatus 20 as well as of the battery power unit 10. On the other hand, adjustment of battery control parameters allows modification of the operating parameters of the electric vehicle 100 associated with the supply of electricity, to be supplied to the driving apparatus 20.

It should be noted that the step b) may also acquire, by operating parameters associated with the settings entered by the user during use of the electric vehicle 100, such as direction of drive, pedal assist level or other parameters known in the art, using the sensors.

According to a preferred embodiment, the sensors of the second set of sensors 40 may be associated with sensor devices 300 that can be associated with the electric vehicle 100 to acquire additional operating parameters of the apparatus such as: the vibration of the tires or the state of wear of the tires. Here, the second dataset Set2 may also comprise additional operating parameters of the electric vehicle 100. In detail, the step b) includes acquiring overall operating data that can be associated with the electric vehicle 100, preferably with the driving apparatus 20.

In an additional embodiment that can be combined with the previous ones, the sensors of the second set of sensors 40 can be associated with a user operating the electric vehicle 100 by means of corresponding user-wearable data acquisition devices 200. Here, the step b) may acquire a third dataset Set3 representative of the user and comprising user-related parameters such as vital heart and/or respiratory rate parameters during use of the electric vehicle 100. This third dataset Set3 can then be associated with the first and second datasets Set1, Set2 to adjust the control parameters of the electric vehicle 100.

Therefore, it should be noted that step a) and the step b) include acquiring the first dataset Set1 and the second dataset Set2 and preferably the third dataset Set3, for each sampling time interval. Specifically, the steps (a) and (b) can acquire datasets in temporally successive sampling intervals to continuously monitor the operating parameters of the electric vehicle 100. This sampling time period may range from 1 second to one or more days depending on the state of motion of the electric vehicle 100. For example, the sampling interval may range from 1 second to 1 minute if the electric vehicle is moving along a path or from 1 hour to 10 hours if the electric vehicle is still relative to a reference system. Advantageously, the method allows the battery power unit to be monitored to prevent it from falling below the functionality limit of the cell even during idle periods.

The method 1 includes a step c) of sending the first dataset Set1 and the second dataset Set2 to a processing unit 50. Specifically, the first set of sensors 30 and the second set of sensors 40 are in signal communication with the processing unit 50, whereby the step c) includes periodically sending the first and second datasets Set1, Set2 to the processing unit 50 for further analysis and processing. In detail, the first and second datasets, Set1, Set2 may be sent either in wired or wireless mode depending on the position of processing unit 50 relative to the electric vehicle 100. Thus, according to a preferred embodiment, the processing unit 50 can be placed in a corresponding space formed on the electric vehicle 100 and can communicate with the sets of sensors 20, 30 in either wired or wireless mode. Alternatively, the processing unit 50 can be placed remote from the electric vehicle 100, for example, in a facility and wirelessly communicate with the set of sensors 20, 30.

According to a preferred embodiment, the first and second datasets, Set1, Set2 can be managed by a control unit 70 associated with the electric vehicle 100 and in signal communication with the sets of sensors 20, 30 and with the processing unit 50. It should be noted that control unit 70 is configured to control the supply of electricity from battery power unit 10 to driving apparatus 20 and to control the battery power unit 10 and the driving apparatus 20. Specifically, the control unit 70 is configured to control the control electronics associated with the battery power unit 10 and the driving apparatus 20 preferably using battery control parameters and operating control parameters. Preferably, as explained below, the control unit 70 in signal communication with a controller 13 of the battery power unit 10 and a control unit 150 of the driving apparatus 20 is configured to control battery control parameters and operating control parameters.

According to the present embodiment, the step c) comprises a step c1) of sending the first dataset Set1 and the second dataset Set2 to the control unit 70. Next, the step c) comprises a step c2) of sending, by the control unit 70, the first dataset Set1 and the second data set Set2 to the processing unit 50 in signal communication with the control unit 70.

It should be noted that if there is a third dataset Set3, then it is also sent to the processing unit 50 in signal communication with its user-associated devices, preferably via the control unit 70.

The method 1 includes a step d) of generating, by the processing unit 50, a system state signal Ss representative of an operating state of the electric vehicle 100.It should be noted that the system state signal Ss is a function of an operating state of the battery power unit 10 and of an operating state of the driving apparatus 20. In particular, the system state signal Ss can organize the set of the operating parameters acquired to define an operating state of the system at the time of sampling by the sensors. In detail, the state signal Ss is the aggregation, preferably organized and processed, of the acquired operating parameters that determines the operating state of the electric vehicle over the sampling interval.

Thus, the method is beneficial in that it can periodically monitor the operating state of the electric vehicle.

According to the preferred embodiment in which the method acquires the third data set Set3, the system state signal Ss is also a function of a user state so that the control unit 70 can act on the driving apparatus 20 and/or the battery power unit 10 while also accounting for the user state.

Preferably, the step d) consists of a step d1) of generating a battery signal Sb representative of the operating state of the battery power unit 10 by correlating the corresponding acquired operating parameters. In addition, the step d) also includes a step d2) of generating an apparatus signal Sa representative of the operating state of the driving apparatus 20 by correlating its acquired operating parameters. According to the embodiment in which the third dataset Set3 is acquired, the step d2) includes generating also a user signal Su representative of the user state. Finally, the step d) includes the step d3) of generating the system state signal Ss as a function of the battery signal Sb and the apparatus signal Sa generated and preferably also as a function of the user signal Su.

Therefore, this system state signal Ss is representative of the operating state of the electric vehicle 100 in the sampling interval and may change to through successive sampling intervals, for example, in response to a change in the control parameters and/or a change in the use of the electric vehicle 100 by the user.

Preferably, the step d) includes generating a system state signal Ss for each sampling interval preferably designed to be stored in processing unit 50.

The method 1 comprises a step e) of comparing, by the processing unit 50, the generated system state signal Ss with reference signals Sr associated with reference states of the Electric vehicle 100 as stored in a database 60 associated with the processing unit 50. Preferably, the step e) includes comparing the system state signal Ss to the reference signals Sr as a function of the operating parameters to recognize the operating state of the electric vehicle 100 among the reference operating states associated with the reference signals Sr.

It should be noted that this recognition allows the operating state of the system to be recognized among those available so that control signals can be later generated to optimize the use of the battery power unit 10 and/or the driving apparatus 20. By generating control signals, as explained below, the operating state may be acted upon and changed to attain a preferred operating state.

Preferably, the step e) includes identifying a reference state for the electric vehicle 100 and associating it to the operating state of the electric vehicle 100 by comparing the operating parameters of the reference signals Sr and the system state signal Ss as a function of preset ranges of values. It should be noted that each reference signal Sr for a reference state of the electric vehicle 100 is associated with a combination of operating parameters of the battery power unit 10 and of the driving apparatus 20 having an associated preset range of values associated therewith.

Specifically, the step e) comprises the step e1) of comparing each operating parameter associated with the system state signal Ss with the operating parameters associated with the reference signals Sr via preset ranges of values. Specifically, the step e1) includes comparing each system state signal operating parameter Ss with preset ranges of values associated with corresponding operating parameters of reference signals Sr. It should be noted that the comparison may be made also between groups of operating parameters. Then, the step e) includes the step e2) of associating a reference signal with the system state signal Ss if one or more of the operating parameters associated with the system state signal Ss fall within the preset ranges of values associated with the operating parameters of the reference signals Sr. Thus, the step e) recognizes the operating state from the reference states.

For example, the temperature operating parameter of the battery power unit may be associated with a temperature range that identifies a reference state of the battery at the correct temperature and a temperature range that identifies a reference state of the critical temperature battery. If by comparison of the system state signal Sc, the battery power unit temperature falls within the correct temperature range, the method allows the correct temperature reference state to be identified as the operating state.

Advantageously, by recognizing the operating state the electric vehicle 100 can be acted upon by optimizing the use of the battery power unit 10 and the driving apparatus 20.

Advantageously, the recognition of the operating state and/or the recognition of a sequence of operating states allows prediction by comparison of the evolution of the operating state of the electric vehicle with the reference states, whereby actions can be accordingly taken on the control parameters.

The method 1 includes a step f) of generating a first control signal Sc1 as a function of the comparison between the generated system state signal Ss and the reference signals Sr. Specifically, the step f) includes generating a first control signal Sc1 if an operating state has been identified from the reference states. Preferably, it should be noted that each reference state has one or more actions to be taken on the electric vehicle 100 associated therewith, such as controlling the supply of electricity or controlling the battery power unit 10 and/or controlling the driving apparatus 20. Thus, each control signal is representative of one or more instructions to be executed on the electric vehicle 100. It should be noted that these instructions for the first control signal Sc1 are associated with changes in battery control parameters to regulate the supply of electricity. Specifically, each first control signal is representative of a change to the battery control parameters for controlling the supply of electricity. This first control signal Sc1 with its modification to the battery control parameters can act on the recognized operating state and change it if needed. Thus, an action on the battery control parameters results in a direct or indirect change of the operating parameters that can be detected by the sensors, which might change the operating state of the electric vehicle 100 in a subsequent sampling interval. Therefore, the step f) includes generating a first control signal Sc1 to control the battery control parameters as a function of the operating state in the sampling interval.

Preferably, the first control signal Sc1 is representative of the electricity to be supplied from the battery power unit 10. Specifically, the first control signal Sc1 can control the supply of electricity from the battery power unit 10 by controlling each battery cell 11 and/or by controlling the power supply to components of the driving apparatus 30 to be electrically powered by changing the battery parameters. Thus, the method can afford more efficient use of the battery power unit 10 and the driving apparatus 30 in its components.

For example, the first control signal Sc1 is configured to change battery control parameters such as the selection of a battery cell 11 from which the electricity will be supplied. the amount of electricity to be supplied to avoid overheating or whether a certain level of pedal assist should be activated to extend the life of the battery power unit 20.

The method 1 comprises a step g) of regulating, by a control unit 70 in signal communication with the processing unit 50, the supply of electricity from the battery power unit 10 according to the first control signal Sc1 that has been generated. Preferably, the step g) includes controlling by changing the battery control parameters associated with the battery power unit 10 and the driving apparatus 20 to control the supply of electricity.

Specifically, the step g) includes changing the battery control parameters to control the supply of electricity from the battery power unit 10 and to power the driving apparatus 20. In detail, the step g) includes acting on the control electronics of the battery power unit 10 and/or the driving apparatus 20 by the first control signal Sc1 and changing the battery control parameters.

According to a preferred embodiment, the step g) is conducted by means of the control unit 70 in combination with the battery power unit 10 and the driving apparatus 20. Specifically, the step g) includes the step g1) of controlling the supply of electricity for each battery cell 11 to power the driving apparatus 20 as a function of the first control signal Sc1 by changing battery control parameters. Specifically, the step g1) includes acting on each battery cell 11 to regulate the electricity flow from one or more battery cells 11 to the driving apparatus 11 for example to power the electric motor 130. Preferably, the step g1) includes changing the battery control parameters as a function of the first control signal Sc1 to act on the control electronics of the battery power unit 10. More preferably, the step g1) includes switching on or off electricity supply control devices 12, e.g. Mosfets, associated with each battery cell 11 to control the supply of electricity from a corresponding battery cell 11. Alternatively or in combination, the step g1) can modulate the electricity to be supplied from one or more battery cells 11 by changing the battery control parameters as a function of the first control signal Sc1.

The step g) also comprises a step g2), conducted in combination with or instead of the step g1), of controlling the supply of electricity between the power battery unit 10 and the driving apparatus 20 as a function of the first control signal Sc1 by changing battery control parameters. Preferably, the step g2) includes changing the battery control parameters as a function of the first control signal Sc1 to act on the control electronics of the driving apparatus 20 and to power or not the driving apparatus 20, namely its components.

More preferably, the step g2) includes switching on or off power devices 21 associated with the driving apparatus 20 to control the supply of electricity to the driving apparatus 20. Again, alternately or in combination, the step g2) can modulate the current to power the driving apparatus 20 by changing the battery control parameters as a function of the first control signal Sc1. Specifically, the step g2) controls the power supply to one or more components of the driving apparatus. Preferably, the step g1) includes controlling the amount of electricity to be supplied and from which battery cells 11, while the step g2) includes checking whether the driving apparatus 20, namely its components, have to be powered.

With the first control signal Sc1, the step g) may change the battery control parameters to control the supply of electricity to the electric vehicle 100 as a function of the identified operating state. It should be noted that the change of the battery control parameters may correspond to a change of the operating parameters associated with the battery power unit 10 and preferably also associated with the driving apparatus 20. Such a change may accordingly lead, depending on the extent of the change in the operating parameters, to a change in operating state in subsequent sampling intervals.

Advantageously, a change in the battery control parameters can allow the method to change the operating state of the electric vehicle. This will afford efficient optimization and regulation of electricity with as more efficient use of the battery power unit 10 and of the driving apparatus 20.

According to a preferred embodiment, which can be combined with the previous one, the step f) includes generating, according to the comparison, a second control signal Sc2 representative of a feedback check of the battery power unit 10 and the driving apparatus 20 as a function of the operating state of the battery power unit 10 and the driving apparatus 20. Preferably, the second control signal Sc2 is representative of changes to the operating control parameters associated with an active regulation of the components of the driving apparatus 30, such as the pedal assist level, and of the battery power unit, such as the internal temperature. More preferably, the control signal Sc2 can act on the control electronics of the battery power unit 10 and/or the driving apparatus 20 by changing the operating control parameters. It should be noted that in this case the instructions for the second control signal Sc2 are associated with changes of operating control parameters to control the battery power unit 10 and the driving apparatus 20. Specifically, each second control signal Sc2 is representative of a change to the operating control parameters for controlling the battery power unit 10 and/or the driving apparatus 20.

Specifically, the operating control parameters can regulate one or more components of the driving apparatus 20. It should be noted that a change to the operating control parameters may lead to a consequent change to the battery control parameters to regulate the supply of electricity.

According to the present embodiment, the step g) includes checking the operating control parameters of the battery power unit 10 and the driving apparatus 20 as a function of the second control signal Sc2. It should be noted that the second control signal Sc2 can be also affected by the third user-related dataset Set3, e.g. excessive heartbeat fatigue in a given range can affect the second control signal Sc2 to increase assistance to the driving force. This control is conducted by means corresponding control electronics of the battery power unit 10 and the driving apparatus 20.

As already mentioned, with the second control signal Sc2 preferably combined with the first control signal Sc1, the step g) can change the operating control parameters of the driving apparatus 20 and the battery power unit 10 as a function of the identified operating state. As a result, by changing the control parameters the operating state can also be changed

Beneficial, a change to the operating control parameters may allow the method to change the operating state of the electric vehicle. Thus, the driving apparatus 20 and the battery power unit 10 can be controlled to improve vehicle performance while further optimizing the utilization of the battery power unit 10 and the driving apparatus 20

Certain examples of operation of the method of the invention are described below, with the two- or three-wheeled electric vehicle being an electric bicycle. Specifically, once the data for the battery power unit 10 and the driving apparatus 20 have been acquired, the method identifies an operating state which corresponds to a reference state where more driving torque is required but the electric motor is in a critical condition (e.g. Excessive temperature or speed). Therefore, the method generates a first control signal that prevents the supply of electricity to avoid overheating. In a further example, once the operating state has been identified where one of the battery cells is overcharged and a greater driving torque is required. the method generates a first control signal to avoid an additional electricity demand from the overloaded cell and supply the electricity required from the other cells.

It should be noted that steps a)-g) are repeated periodically as a function of the comparison between the system state signal Ss and the reference signals Sr. Thus, the method affords continuous and active control of the electric vehicle 100. Preferably, the repetition of steps a) to g) also provides autonomous and/or semi-autonomous control of the electronics associated with the electric vehicle 100.

According to a preferred embodiment, the method comprises a step h) of periodically repeating the steps a) to g) as a function of the identified operating state and the generated control signals. Specifically, the step h) includes continuously monitoring the operating state of the electric vehicle 100 as a function of the changes to the control parameters if made. Thus, the electric vehicle can be kept in a certain operating state between stored reference states in an autonomous and/or semi-autonomous manner. Preferably, this determined operating state is a specific operating state suitable for the electric vehicle 100.

Advantageously, the method 1 affords continuous and autonomous and/or semi-autonomous control of the battery power unit 10 and the driving apparatus 20 by managing their respective control electronics.

Preferably, the step h) also includes generating performance signals associated with the performance of the electric vehicle 100. These performance signals are sent to user interfaces that can be displayed by mobile devices, such as smartphones, tablets, smart watches, or fixed devices such as computers. By this arrangement, the operating state of the electric vehicle 100 can also be monitored in terms of performance, such as residual charge, speed, position, etc. These signals can also be stored for later reference in the relevant fixed or mobile device memory areas or in the database 60. In addition, these performance signals may be associated with additional alarm signals if they exceed certain thresholds. These warning signals alert the user about any particular problem or state of the electric vehicle 100. For example, if the residual charge level of the battery power unit is below a certain threshold, the alarm signal informs the user that the battery power unit is out-of-charge and needs recharging. Therefore, the step h) also includes sending the performance and alarm signals to the user via the data processing unit 50 and/or the control unit 70.

According to a preferred embodiment, the step e) and the step f) are conducted using based on neural network- or machine learning-based algorithm resident in the processing unit 50.

Preferably, the algorithm can afford recognition of an operating state from reference states and generate corresponding control signals to be generated for active operation on the electric vehicle 100. More preferably, the algorithm can also predict the evolution of the operating state via the reference states and generate the corresponding control signals. According to a preferred embodiment, the step d) of generating a system state signal Ss shall be conducted by the neural network- or machine learning-based algorithm resident in processing unit 50 so that the operating parameters will be aggregated to define a system state signal Ss representative of the operating state of the electric vehicle 100.

Preferably, the neural network-based algorithm is trained to recognize the system operating state from the reference states by associating each reference state with operating parameters of the battery power unit 10, operating parameters of the driving apparatus 20 or a combination thereof to compare them with preset ranges of values. Preferably, the algorithm is trained by loading reference states of the electric vehicle into the database 60. In addition, the algorithm can also generate the control signals to change the control parameters as a function of the identified operating state by accounting for the training and the associated effect that changes of previous control features have had on the operating state.

More preferably, the method includes a step of continuously training the neural network- or machine learning-based algorithm by storing system state signals with their operating parameters and continuously updating the reference states also in relation to the ranges of values. This training step may also account for the effect on the operating state of the change in the control parameters as well as on the effective life of the battery power unit and driving apparatus.

Alternatively, or in combination with neural network- or machine learning-based algorithms, the steps d)-f) may also be conducted using comparison and recognition algorithms. These comparison and recognition algorithms employ mathematical formulations developed for the field of application, with the aim of creating Digital Twins for reference.

A further object of the present invention also relates to a two or three-wheeled electric vehicle 100 configured to perform the method as described above. The electric vehicle 20 may be driven by a user, as anticipated, who may control certain parameters to regulate driving.

The two- or three-wheeled electric vehicle 100 comprises a driving apparatus 20 which is at least partially electrically powered. This driving apparatus 20 is configured to allow the electric vehicle 100 to be driven on a path, for example.

According to a preferred embodiment, the driving apparatus 20 as mentioned above, comprises a plurality of electrical and mechanical components. Specifically, the driving apparatus 20 comprises a support frame 110 configured to support the battery power unit 10 and the components of the driving apparatus 20. As is known, the support frame 110 maybe made of different materials and have different shapes.

The driving apparatus 20 comprises tires 120 pivotally coupled to the support frame 110. The tires 120 are configured to provide ground contact when the electric vehicle 100 is driving, by rotating about their respective rotation axes defined by the coupling with the support frame 110, such as a pivot pin.

The driving apparatus 20 comprises an electric motor 130 at least partially powered by the battery power unit 10 and electrically connected to the battery power unit 10. In alternative forms, the electric motor 130 is entirely powered by the battery power unit 10. Specifically, the electric motor 130 is configured to generate a driving force to drive the 120 tires.

The driving apparatus 20 also includes transmission means 140 configured to transmit the driving force from the electric motor 130 to the tires 120. It should be noted that, according to certain embodiments, such as electric bicycles, the transmission means 140 are also configured to transmit the driving power supplied by the user to the tires 120 via the pedals.

Preferably, the transmission means 140 are also configured to transmit any driving forces from the tires to the battery power unit for charging the battery cells 11. In addition, the transmission means 140 may be regulated, for example, by switching the gear to control the driving force to be supplied. Preferably, the transmission means 140 are associated with an adjustable gear switch.

It should be noted that the driving apparatus 20 comprises one or more power devices 21 configured to control the supply of electricity to the driving apparatus 20 as a function of the first control signal Sc1.

Preferably, the driving apparatus 20 comprises control electronics associated with the electrical components of the driving apparatus 20 and configured to control those components as a function of the control signals that have been generated. Specifically, this control electronics is configured to control the electricity supply control devices 21 to regulate the power supply and the electronic components.

The equipment 20 comprises control means 150 configured to control and regulate the control parameters for the driving apparatus 10 as a function of the control signals. Preferably, the control means 150 are associated with the electric motor 130 and the transmission means 140. Specifically, the control means 150 are configured to control the electric motor 130 and the transmission means 140 as a function of the second control signal Sc2. Preferably, the control means 150 are also configured to control the additional components of driving apparatus 20 such as the braking equipment, the gearbox, the lighting means as a function of the second control signal Sc2. More preferably, the control means 150 are configured to control the supply of electricity to the driving apparatus, in particular its components as a function of the first control signal Sc1. According to a preferred embodiment, the control means 150 comprise the control electronics associated with the driving apparatus 20.

The driving apparatus 20 also includes steering equipment 160 configured to steer the electric vehicle 100 on a path of the electric vehicle 100. For example, the steering means 160 comprise a handlebar or a steering wheel and corresponding steering elements associated with the 110 tires. Specifically, the steering means 160 can adjust the direction of one or more tires 110 and hence the direction of the electric vehicle 100.

Preferably, the driving apparatus 20 also includes braking devices configured to apply a braking torque to the tires 110, lighting equipment to control the lighting of the ground and to indicate the presence of the vehicle on the ground. More preferably, the driving apparatus 20 can include electronic and mechanical components known in the art for bicycles, scooters and electric motor bikes.

The electric vehicle 20 comprises a battery power unit 10 electrically connected to the driving apparatus 20 and configured to power the driving apparatus 20. Specifically, the battery power unit 10 comprises a plurality of battery cells 11. Preferably, the battery power unit 10 comprises groups of serially connected battery cells, where each group of battery cells is connected in parallel with the other groups.

It should be noted that each battery cell 11 is associated with an electricity supply control device 12, such as mosfets. Preferably, current delivery controllers 11 are arranged in the control unit 70 which includes them. Alternatively, the electricity supply devices 12 shall be located throughout the battery power unit 10. Each electricity supply control device 12 is configured to control the electricity supply from a corresponding battery cell 11 as a function of the first control signal Sc1. The battery power unit 10 may comprise additional mechanical and electronic components for the operation of the unit.

Preferably, the battery power unit 20 comprises control electronics associated with the electronic components of the battery power unit 10 and configured to control them as a function of the generated control signals. Specifically, this control electronics is configured to control the electricity supply control devices 12 to regulate the power supply by changing the battery control parameters. This control electronics is also configured to control the additional components of the battery power unit 10 by changing the operating control parameters.

According to a preferred embodiment, the battery power unit 10 comprises a controller 13 configured to control the supply of electricity as a function of the first control signal Sc1 by adjusting the battery control parameters. Preferably, the controller 13 is also configured to control the components of the battery power unit 20 as a function of the second control signal Sc2 by adjusting the operating control parameters.

Preferably, the battery power unit 10 comprises means for charging the battery cells 11 that can be associated with corresponding public and/or private charging stations.

The electric vehicle 20 comprises a control unit 70 in signal communication with the driving apparatus 20 and the battery power unit 11. The control unit 70 is configured to regulate the supply of electricity from each battery cell 11 to the driving apparatus 20 and to control the driving apparatus 20 and preferably the battery power unit 10. Preferably, the control unit 70 is associated with the control electronics of the battery power unit 10 and the driving apparatus 20. Specifically, the control unit 70 is configured to change the control parameters as a function of the received control signals. In detail, the control unit 70 is in signal communication with control unit 150 for controlling the driving apparatus 20 and with the controller 13 for controlling the battery power unit 13.

According to an alternative embodiment, the control unit 70 integrates the control unit 150 and the controller 13 and hence the control electronics of the battery power unit 10 and the driving apparatus 20 to directly control the driving apparatus 20 and the battery power unit 13 as a function of the control signals by changing the control parameters.

Preferably, the control unit 70 is in signal communication with the electric motor via can BUS and an appropriate protocol, and in signal communication with the other components of the driving apparatus 20 via Can-BUS and/or Bluetooth and/or Ant+ and/or WiFi.

The electric vehicle 20 comprises a first set of sensors 30 associated with the battery power unit 10 and configured to acquire a first dataset Set1 for the operating parameters of the battery power unit 10. The electric vehicle 1 also comprises a second set of sensors 40 associated with the driving apparatus 20 and configured to acquire a second dataset Set2, for the operating parameters of the driving apparatus 20. Preferably, the second set of sensors 30 can also be associated with operating parameter-acquisition devices 300 that can be installed on the electric vehicle. According to a preferred embodiment, the second set of sensors 40 may be also associated with user-wearable devices 200 for acquiring the third dataset Set3.

The electric vehicle 20 comprises a processing unit 50 in signal communication with the control unit 70 and configured to receive the first and second datasets Set1, Set2 and generate a system state signal Ss as a function of the first dataset Set1 and the second dataset Set2 and preferably the third dataset Set3. Preferably, the processing unit 50 is also configured to generate battery signals Sb, apparatus signals Sa and user signals Su to eventually generate the system state signals Ss. The processing unit 50 is also configured to generate a first control signal Sc1 and a second control signal Sc2 to be sent to the control unit 70 to regulate the supply of electricity, the battery power unit 10 and the driving apparatus 20. It should be noted that the processing unit comprises a plurality of modules configured to generate the different signals and compare them if needed.

The electric vehicle 20 comprises a database 60 associated with the processing unit 50 and configured to store reference signals Sr.

According to a preferred embodiment, the processing unit 50 preferably with the database 60 is housed in a compartment formed on the electric vehicle 100. Thus, the processing unit 50 and the control unit 70 may be in wireless or wired signal communication. Alternatively, the processing unit 50, preferably in combination with the database 60, is remote from the electric vehicle 100, for example in a facility. Thus, the processing unit 50 and the control unit 70 may be in wireless signal communication.

The present invention also relates to a system comprising the two- or three-wheeled electric vehicle 100 as described above, the control and monitoring devices and/or the user-worn devices 200 and sensor devices 300 associated with the vehicle.

## Claims

1. A method (1) of controlling the supply of electricity in a two- or three-wheeled electric vehicle (100) comprising a battery power unit (10) and a driving apparatus (20) at least partially powered by the battery power unit (10), said battery power unit (10) comprising a plurality of battery cells (11), said method (1) comprising the steps of:
a) acquiring, by a first set of sensors (30) associated with the battery power unit (10), a first dataset (Set1) representative of operating parameters of the battery power unit (10);
b) acquiring, by a second set of sensors (40 ) associated with the driving apparatus (20), a second dataset (Set2) representative of operating parameters of the driving apparatus (20);
c) sending the first data set (Set1) and the second data set (Set2) to a processing unit (50);
d) generating, by the processing unit (50), a system state signal (Ss) representative of an operating state of the electric vehicle (100); said system state signal (Ss) being a function of an operating state of the battery power unit operating state and an operating state of the driving apparatus;
e) comparing, by the processing unit (50), the system state signal (Ss) generated with reference signals (Sr) associated with reference states of the electric vehicle (100) stored in a database (60) associated with the processing unit (50);
f) generating a first control signal (Scl) as a function of the comparison between the system state signal (Ss) generated and the reference signals (Sr), said first control signal (Scl) being representative of the electricity to be supplied by the battery power unit (10);
g) regulating, by a control unit (70 ) in signal communication with the processing unit (50), the supply of electricity from the battery power unit (10) as a function of the first control signal (Scl) that has been generated.

2. The method (1) as claimed in claim 1, wherein the step g) conducted by means of the control unit (70) in combination with the battery power unit (10) and the driving apparatus (20), comprises the steps of:
g1) controlling the supply of electricity for each battery cell (11 ) to power the driving apparatus (20) as a function of the first control signal (Scl) by changing battery control parameters; and/or
g2) controlling the supply of electricity between the power battery unit (11) and the driving apparatus (20) as a function of the first control signal (Scl) by changing battery control parameters.

3. The method (1) as claimed in claim 2, wherein:
- the step g1) includes switching on or off electricity supply control devices (12) associated with each battery cell (11) to control the supply of electricity from a corresponding battery cell (11);
- the step g2) includes switching on or off power devices (21 ) associated with the driving apparatus (20 ) to control the supply of electricity to the driving apparatus (20).

4. The method (1) as claimed in any of the claims 1 to 3, wherein
- the step f) includes generating, according to the comparison, a second control signal (Sc2) representative of a feedback check of the battery power unit (10) and the driving apparatus (20 ) as a function of the operating state of the battery power unit (10) and the driving apparatus (20);
- the step g) includes checking operating control parameters of the battery power unit (10) and the driving apparatus (20) as a function of the second control signal (Sc2).

5. The method (1) as claimed in claim 4, wherein the step e) includes identifying a reference state for the electric vehicle (100) and associating it with the operating state of the electric vehicle (100) by comparing the operating parameters of the reference signals (Sr) and the system state signal (Ss) as a function of preset ranges of values, each reference signal (Sr) for a reference state of the electric vehicle (100) being associated with a combination of operating parameters of to the battery power unit (10) and the driving apparatus (20).

6. The method (1) as claimed in claim 5, wherein the step f) includes generating the first control signal (Scl) and the second control signal (Sc2) as a function of the reference state of the electric vehicle (100) identified and associated with the operating state of the electric vehicle (100).

7. The method (1) as claimed in any of claims 1 to 6, wherein the step d) comprises the steps of:
d1) generating a battery signal (Sb) representative of the operating state of the battery power unit (10) by correlating the corresponding acquired operating parameters;
d2) generating an apparatus signal (Sa) representative of the operating state of the driving apparatus (20) by correlating its acquired operating parameters.
d3) generating the system state signal (Ss) as a function of the battery signal (Sb) and the apparatus signal (Sa) that have been generated.

8. The method (1) as claimed in any of claims 1 to 7, wherein the step e) and the step f) are conducted using a neural network- or machine learning-based algorithm resident in the processing unit (50) and/or comparison and recognition algorithms.

9. The method (1) as claimed in claim 8, wherein the neural network-based or machine learning-based algorithm is trained to recognize the system operating state from the reference states by associating each reference state with operating parameters of the battery power unit 10, operating parameters of the driving apparatus 20 or a combination thereof to compare them with preset ranges of values.

10. The method (1) as claimed in any of claims 1 to 9, wherein:
- the step a) and the step b) include acquiring the first dataset (Set1) and the second dataset (Set2) for each sampling time interval; and
the steps a)-g) are repeated periodically as a function of the comparison between the system state signal (Ss) and the reference signals (Sr).

11. The method (1) as claimed in any of the claims 1 to 10, wherein:
- in step a) the first data set (Set1) comprises operating parameters for temperatures, voltages, charging currents and/or discharge currents of each battery cell (11);
- in step b) the second dataset (Set2) comprises operating parameters for vehicle speed, driving torque delivered, motor temperatures, braking torque.

12. The method (1) as claimed in any of claims 1 to 11 wherein the step c) comprises the steps of:
c1) sending the first dataset (Set1) and the second dataset (Set2) to the control unit (70) in signal communication with the first set of sensors (30) and the second set of sensors (40);
c2) sending, by the control unit (70), the first dataset (Set1) and the second data set (Set2) to the processing unit (50) in signal communication with the control unit (70).

13. Two or three-wheeled electric vehicle (100) comprising:
- a driving apparatus (20) which is at least partly electrically powered;
- a battery power unit (10) electrically connected to the driving apparatus (20) and configured to power the driving apparatus (20), said battery power unit (10) comprising a plurality of battery cells (11);
- a control unit (70) in signal communication with the driving apparatus (20) and the battery power unit (11), the control unit (70) being configured to regulate the supply of electricity from each battery cell (11) to the driving apparatus (20) and to control the driving apparatus (20) and the battery power unit (11);
- a first set of sensors (30) associated with the battery power unit (10) and configured to acquire a first dataset (Set1) for the operating parameters of the battery power unit (10);
- a second set of sensors (40) associated with the driving apparatus (20) and configured to acquire a second dataset (Set1), for the operating parameters of the driving apparatus (20);
- a processing unit (50) in signal communication with the control unit (70) and configured to receive the first and second datasets (Set1, Set2) and generate a system state signal (Ss) as a function of the first dataset (Set1) and the second dataset (Set2) and a first control signal (Scl) and a second control signal (Sc2) to be sent to the control unit (70) to regulate the supply of electricity, the battery power unit (10) and the driving apparatus (20)
- a database (60) associated with the processing unit (50) and configured to store reference signals (Sr).

14. The two- or three-wheeled electric vehicle (100) as claimed in claim 13, wherein
- each battery cell (11) is associated with an electricity supply control device (12) which is configured to control the supply of electricity from a corresponding battery cell (11) as a function of the first control signal (Sc1);
- the driving apparatus (20) comprises one or more power devices (21) configured to control the supply of electricity to the driving apparatus (20) as a function of the first control signal (Sc1).

15. The two- or three-wheeled electric vehicle (100) as claimed in claim 14 or 15, wherein the driving apparatus (20) comprises:
- a support frame (110);
- one or more tires (120) pivotally coupled to the support frame (110);
- an electric motor (130) which is at least partially powered by the battery power unit (10) and electrically connected to the battery power unit (10), said electric motor (130) being configured to generate a driving force for driving the tires (120),
- transmission means (140) configured to transmit the driving force from the electric motor (130) to the tires (120);
- control means (150) configured to control and regulate the control parameters of the driving apparatus (10) as a function of the control signals;
- steering means (160) configured to maneuver the electric vehicle (100) along a moving path.
